# EUROPEAN PATENT APPLICATION

(11) **EP 4 481 559 A1**
(43) Date of publication of application: **25.12.2024**
(21) Application number: 23206716.5
(22) Date of filing: 30.10.2023
(51) Int. Cl.: G06F 8/65, G06F 8/654

(54) **FIRMWARE UPDATING METHOD AND APPARATUS, FIRMWARE UPDATING SYSTEM, AND ELECTRONIC DEVICE**

(30) Priority: 19.06.2023 CN 202310728928
(71) Applicant: Beijing Xiaomi Mobile Software Co., Ltd., Beijing 100085 (CN)
(72) Inventor: JIANG, Fei, Beijing, 100085 (CN)
(74) Representative: dompatent von Kreisler Selting Werner - Partnerschaft von Patent- und Rechtsanwälten mbB

(57) **Abstract**

A firmware updating method includes: sending (11) first data to a terminal, wherein the first data includes charging state information of a charger during charging; receiving (12) second data sent by the terminal, wherein the second data includes program data determined based on the first data and configured for updating firmware of the charger; and updating (13) the firmware of the charger based on the second data.

## Description

### FIELD

The present invention relates to a field of charging, and in particular to a firmware updating method, a firmware updating apparatus, a firmware updating system, and an electronic device.

### BACKGROUND

With the continuous development of the terminal (such as the mobile phone) charging technology, the charging power is increasing constantly, and the performance and safety of the charger are becoming more and more important. During charging, if the firmware of the charger is damaged or the hardware does not work normally, the charging may fail, and even cause potential safety hazards in the high-power charging scene.

### SUMMARY

The present invention provides a firmware updating method, a firmware updating apparatus, a firmware updating system, and an electronic device.

According to a first aspect of the present invention, there is provided a firmware updating method, which is executed by a charger and includes: sending first data to a terminal, wherein the first data includes charging state information of the charger during charging; receiving second data sent by the terminal, wherein the second data includes program data determined based on the first data and configured for updating a firmware of the charger; and updating the firmware of the charger based on the second data.

Optionally, the charging state information includes at least one of a number of protection events, a charging current, a charging voltage, a device temperature, a charging efficiency, an adopted charging protocol, a charging power, a working state of a key device, a charging voltage requested by the terminal and a charging current requested by the terminal.

Optionally, the method further includes: storing the first data; and deleting the stored first data after a first time.

Optionally, the sending the first data to the terminal includes sending the first data to the terminal in response to being in a charging completion state.

Optionally, the method further includes sending an update information to the terminal. The update information indicates a progress of updating the firmware of the charger by the terminal.

According to a second aspect of the present invention, there is provided a firmware updating method, which is executed by a terminal and includes: receiving first data sent by a charger, wherein the first data includes charging state information of the charger during charging; sending the first data to a cloud; receiving second data from the cloud in response to that a firmware of the cloud is different from a firmware of the charger, wherein the second data includes program data determined based on the first data and configured for updating the firmware of the charger; and sending the second data to the charger.

Optionally, the sending the first data to the cloud includes sending the first data to the cloud in response to that a state indicated by the charging state information is a first state. The first state is determined based on the number of times of protection events that have occurred in the terminal.

Optionally, the sending the second data to the charger includes: sending the second data to the charger in response to that the terminal is in a charging completion state; and/or, sending the second data to the charger in response to detecting a first operation instruction of a user.

Optionally, the method further includes receiving update information sent by the charger. The update information indicates a progress of updating the firmware of the charger by the terminal.

According to a third aspect of the present invention, there is provided a firmware updating method, which is executed by a cloud and includes: receiving first data sent by a terminal, wherein the first data includes charging state information of the charger during charging; acquiring second data, wherein the second data includes program data determined based on the first data and configured for updating firmware of the charger; and sending the second data to the terminal.

According to a fourth aspect of the present invention, there is provided a firmware updating apparatus, and the apparatus includes: a processor; and a memory configured to store instructions executable by the processor. The processor is configured to perform the firmware updating method according to the first aspect of the present invention.

According to a fifth aspect of the present invention, there is provided a firmware updating apparatus, and the apparatus includes: a processor; and a memory configured to store instructions executable by the processor. The processor is configured to perform the firmware updating method according to the second aspect of the present invention.

According to a sixth aspect of the present invention, there is provided a firmware updating apparatus, and the apparatus includes: a processor; and a memory configured to store instructions executable by the processor. The processor is configured to perform the firmware updating method according to the third aspect of the present invention.

According to a seventh aspect of the present invention, there is provided a firmware updating system, which includes a charger, a terminal and a cloud. The charger is configured to execute the method according to the first aspect of the present invention, the terminal is configured to execute the method according to the second aspect of the present invention, and the cloud is configured to execute the method according to the third aspect of the present invention.

According to an eighth aspect of the present invention, there is also provided an electronic device, which includes: a processor; and a memory configured to store instructions executable by the processor. The processor is configured to perform the firmware updating method according to any one of the first, second and third aspect of the present invention.

The technical solutions provided by embodiments of the present invention include the following beneficial effects.

In the embodiments of the present invention, the first data is sent to the terminal, and the first data includes the charging state information of the charger during charging; the second data sent by the terminal is received, and the second data includes the program data determined based on the first data and configured for updating the firmware of the charger; and the firmware of the charger is updated based on the second data. Here, the charger may send the first data of the charger, which includes the charging state information of the charger during charging, to the terminal, and receive the second data from the terminal. Since the second data includes the program data determined based on the first data and configured for updating the firmware of the charger, after receiving the second data, the program of the firmware can be updated based on the second data. Compared with the case that the firmware cannot be updated, the firmware of the charger can be updated. On one hand, the program of the firmware can be updated in time when the charger fails, and on the other hand, the program of the firmware can be adapted to the charging state information. In this way, the charging process of the charger is more reliable, and the potential safety hazards caused by charging failure and charging fault can be reduced.

It is to be understood that both the foregoing general description and the following detailed description are illustrative and explanatory only and are not restrictive of the present invention.

### BRIEF DESCRIPTION OF THE DRAWINGS

The accompanying drawings, which are incorporated in and constitute a part of this specification, illustrate embodiments consistent with present invention and serve to explain the principles of the present invention together with the specification.
Fig. 1 is a flow chart of a firmware updating method according to an illustrative embodiment of the present invention.
Fig. 2 is a flow chart of a firmware updating method according to an illustrative embodiment of the present invention.
Fig. 3 is a flow chart of a firmware updating method according to an illustrative embodiment of the present invention.
Fig. 4 is a flow chart of a firmware updating method according to an illustrative embodiment of the present invention.
Fig. 5 is a flow chart of a firmware updating method according to an illustrative embodiment of the present invention.
Fig. 6 is a flow chart of a firmware updating method according to an illustrative embodiment of the present invention.
Fig. 7 is a block diagram of a firmware updating apparatus according to an illustrative embodiment of the present invention.
Fig. 8 is a block diagram of a firmware updating apparatus according to an illustrative embodiment of the present invention.
Fig. 9 is a block diagram of a firmware updating apparatus according to an illustrative embodiment of the present invention.
Fig. 10 is a block diagram of an electronic device according to an illustrative embodiment of the present invention.

### DETAILED DESCRIPTION

Reference will now be made in detail to embodiments, examples of which are illustrated in the accompanying drawings. When the following description refers to the drawings, unless otherwise indicated, the same numbers in different drawings indicate the same or similar elements. The embodiments described in the following embodiments do not represent all embodiments consistent with the present invention. Rather, they are merely examples of devices and methods consistent with some aspects of the present invention.

In order to facilitate the understanding of any one of embodiments of the present invention, related scenarios are firstly described as follows.

In an embodiment, a charger that provide power for charging a mobile phone interacts with the mobile phone according to specific protocols (e.g., Power Delivery (PD) protocol or proprietary protocols of various manufacturers, etc.), and provide voltages and/or currents requested by the mobile phone. However, in a long-term use, it is impossible to upgrade the firmware and detect a charging state for the charger, and there is no charger dotting data for developers to analyze. If there is a problem with the charger itself, even if it is a firmware problem, it is impossible to repair and upgrade the charger firmware.

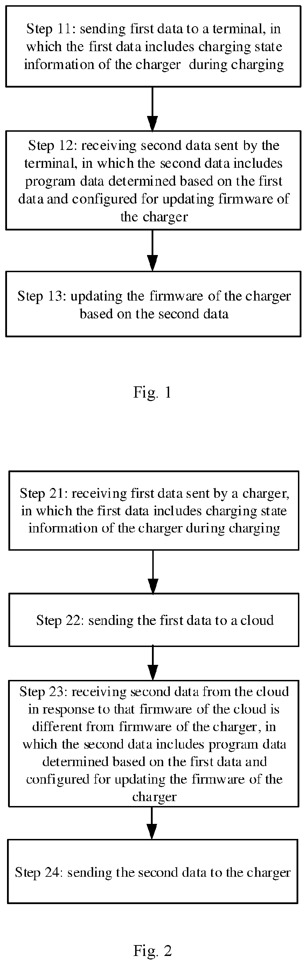

As shown in Fig. 1, embodiments of the present invention provide a firmware updating method, which is executed by a charger, and includes the following steps.

At step 11, first data is sent to a terminal, and the first data includes charging state information of the charger during charging.

At step 12, second data sent by the terminal is received, and the second data includes program data for updating firmware of the charger determined based on the first data.

At step 13, the firmware of the charger side is updated based on the second data.

In an embodiment, the first data of the charger is acquired, and the first data includes the charging state information of the charger during charging. The first data is sent to the terminal. The second data sent by the terminal is received, and the second data includes the program data determined based on the first data and configured for updating the firmware of the charger. The firmware of the charger is updated based on the second data.

In an embodiment, the terminal may actively acquire the first data of the charger, and for example, the terminal may periodically acquire the first data according to a first cycle. For example, in response to a change of the first data, the terminal actively acquires the first data of the charger.

It should be noted that in the present invention, the firmware version rollback is also a way to update the firmware of the charger in the present invention. That is, updating the firmware of the charger may include performing a version rollback operation for the firmware.

In an embodiment, the charger may be a charger with a data processing function and a data transmission function. The charger can charge the terminal after being connected with a power supply and the terminal, and can send data to the terminal and receive the data sent by the terminal.

In an embodiment, each charger corresponds to a unique identifier for representing the charger.

In an embodiment, the charger is provided with a programmable memory, which stores a program of the firmware and can be written and erased repeatedly (such as for 1000 times). Here, the program of the firmware may be a control program related to controlling the charging and/or communication of the charger.

In an embodiment, the charger is provided with a predetermined storage space (such as 32Mb). The predetermined storage space is used for storing key data acquired during running of a fixed program, such as date, the number of times of over temperature protection (OTP), the number of times of over current protection (OCP), the number of times of over voltage protection (OVP), the number of times of under voltage protection (UVP), a negative temperature coefficient (NTC) temperature of the charger, the number of times of overheating, an output current of the charger, an output voltage of the charger, a charging efficiency, a used protocol and other data. It should be noted that the key data may be saved for a predetermined duration (such as one month), and the saved key data may be automatically deleted if the predetermined duration is exceeded.

In an embodiment, the terminal may be various types of mobile devices or fixed devices. For example, the terminal may be a mobile phone, a computer, an intelligent wearable terminal, a smart home terminal, an industrial sensing device and/or a medical device.

In an embodiment, a cloud may be a cloud server. The charger may carry out data interaction with the cloud through the terminal.

In some embodiments, "first data", "dotting data" and "point-buried data" may be interchanged in some scenarios, which all refer to data associated with the charging state acquired by monitoring the charger.

In an embodiment, the charging state information includes at least one of the number of times of protection, a charging current, a charging voltage, a device temperature, a charging efficiency, an adopted charging protocol, a charging power, a working state of a key device, a charging voltage requested by the terminal and a charging current requested by the terminal.

Here, the number of times of protection may be the number of times of OTP, OCP, OVP and/or UVP.

In an embodiment, in response to that the charger is connected with the power supply and the terminal, the charger is monitored to acquire first data of the charger, and the first data includes charging state information of the charger during charging. For example, the first data of the charger may be acquired periodically. The first data is sent to the terminal in response to acquiring the first data. Second data sent by the terminal is received, and the second data includes program data determined based on the first data and configured for updating the firmware of the charger. The firmware of the charger is updated based on the second data.

In an embodiment, first data of the charger is acquired, and the first data includes charging state information of the charger during charging. The first data is sent to a terminal. Second data sent by the terminal is received, and the second data includes program data determined based on the first data and configured for updating the firmware of the charger. The firmware of the charger is updated based on the second data. The first data is stored. The stored first data is deleted after a first time.

In an embodiment, request information sent by a terminal for triggering acquisition of first data is received, and the first data includes charging state information of the charger during charging. In response to acquiring the request information, the first data of the charger is acquired. Request information sent by the terminal for requesting the first data is received. The first data is sent to the terminal in response to receiving the request information. Second data sent by the terminal is received, and the second data includes program data determined based on the first data and configured for updating the firmware of the charger. The firmware of the charger is updated based on the second data.

In an embodiment, first data of the charger is acquired, and the first data includes charging state information of the charger during charging. The first data is sent to a terminal periodically. Second data sent by the terminal is received, and the second data includes program data determined based on the first data and configured for updating the firmware of the charger. The firmware of the charger is updated based on the second data.

In an embodiment, first data of the charger is acquired, and the first data includes charging state information of the charger during charging. Request information sent by a terminal for requesting the first data is received. The first data is sent to the terminal in response to receiving the request information. Second data sent by the terminal is received, and the second data includes program data determined based on the first data and configured for updating the firmware of the charger. The firmware of the charger is updated based on the second data.

In an embodiment, first data of the charger is acquired, and the first data includes charging state information of the charger during charging. The first data is sent to a terminal in response to being in a charging completion state. Second data sent by the terminal is received, and the second data includes program data determined based on the first data and configured for updating the firmware of the charger. The firmware of the charger is updated based on the second data.

In an embodiment, first data of the charger is acquired, and the first data includes charging state information of the charger during charging. The first data is sent to a terminal in response to being in a charging failure state. Second data sent by the terminal is received, and the second data includes program data determined based on the first data and configured for updating the firmware of the charger. The firmware of the charger is updated based on the second data.

In an embodiment, first data of the charger is acquired, and the first data includes charging state information of the charger during charging. The first data is sent to a terminal. Second data sent by the terminal is received, and the second data includes program data determined based on the first data and configured for updating the firmware of the charger. Triggering information sent by the terminal for updating the firmware is received. The firmware of the charger is updated based on the second data in response to receiving the triggering information.

In an embodiment, first data of the charger is acquired, and the first data includes charging state information of the charger during charging. The first data is sent to a terminal. Second data sent by the terminal is received, and the second data includes program data determined based on the first data and configured for updating the firmware of the charger. The firmware of the charger is updated based on the second data in response to being in a charging completion state.

In an embodiment, first data is sent to a terminal, and the first data includes charging state information of the charger during charging. Second data sent by the terminal is received, and the second data includes program data determined based on the first data and configured for updating the firmware of the charger. The firmware of the charger is updated based on the second data. Update information is sent to the terminal. The update information indicates a progress of updating the firmware of the charger by the terminal. Here, the progress may be a percentage, for example, 50% or 80%. It should be noted that the terminal may display the progress after receiving the update information. In this way, the user can intuitively see the displayed progress information.

In the embodiments of the present invention, the first data of the charger is acquired, and the first data includes the charging state information of the charger during charging; the first data is sent to the terminal; the second data sent by the terminal is received, and the second data includes the program data determined based on the first data and configured for updating the firmware of the charger; and the firmware of the charger is updated based on the second data. Here, the charger may acquire the first data of the charger, which includes the charging state information of the charger during charging, send the first data to the terminal, and receive the second data from the terminal. Since the second data includes the program data determined based on the first data and configured for updating the firmware of the charger, after receiving the second data, the program of the firmware can be updated based on the second data. Compared with the case that the firmware cannot be updated, the firmware of the charger can be updated. On one hand, the program of the firmware can be updated in time when the charger fails, and on the other hand, the program of the firmware can be adapted to the charging state information. In this way, the charging process of the charger is more reliable, and the potential safety hazards caused by charging failure and charging fault can be reduced.

It should be noted that those skilled in the art can understand that the methods provided by the embodiments of the present invention may be executed alone or together with some methods in the embodiments of the present invention or some methods in the related art.

As shown in Fig. 2, embodiments of the present invention provide a firmware updating method, which is executed by a terminal, and includes the following steps.

At step 21, first data sent by a charger is received, and the first data includes charging state information of the charger during charging.

At step 22, the first data is sent to a cloud.

At step 23, second data is received from the cloud in response to that firmware of the cloud is different from a firmware of the charger, and the second data includes program data determined based on the first data and configured for updating the firmware of the charger.

At step 24, the second data is sent to the charger.

In an embodiment, first data sent by a charger is received, and the first data includes charging state information of the charger during charging. The first data is sent to a cloud. Firmware of the cloud and firmware of the charger are compared. Second data is received from the cloud in response to that the firmware of the cloud is different from the firmware of the charger, and the second data includes program data determined based on the first data and configured for updating the firmware of the charger. The second data is sent to the charger.

In an embodiment, first data sent by a charger is received, and the first data includes charging state information of the charger during charging. The first data is sent to a cloud. Comparison information sent by the cloud is received, and the comparison information indicates a comparison result acquired by the cloud comparing firmware of the cloud with firmware of the charger. Second data is received from the cloud in response to that the firmware of the cloud is different from the firmware of the charger, and the second data includes program data determined based on the first data and configured for updating the firmware of the charger. The second data is sent to the charger.

In an embodiment, the charger may be a charger with a data processing function and a data transmission function. The charger can charge the terminal after being connected with a power supply and the terminal, and can send data to the terminal and receive the data sent by the terminal.

In an embodiment, each charger corresponds to a unique identifier for representing the charger.

In an embodiment, the charger is provided with a programmable memory, which stores a program of the firmware and can be written and erased repeatedly (such as for 1000 times). Here, the program of the firmware may be a control program related to controlling the charging and/or communication of the charger.

In an embodiment, the charger is provided with a predetermined storage space (such as 32M). The predetermined storage space is used for storing key data acquired during running of a fixed program, such as date, the number of times of over temperature protection (OTP), the number of times of over current protection (OCP), the number of times of over voltage protection (OVP), the number of times of under voltage protection (UVP), a negative temperature coefficient (NTC) temperature of the charger, the number of times of overheating, an output current of the charger, an output voltage of the charger, a charging efficiency, a used protocol and other data. It should be noted that the key data may be saved for a predetermined duration (such as one month), and the saved key data may be automatically deleted if the predetermined duration is exceeded.

In an embodiment, the terminal may be various types of mobile devices or fixed devices. For example, the terminal may be a mobile phone, a computer, an intelligent wearable terminal, a smart home terminal, an industrial sensing device and/or a medical device.

In an embodiment, the cloud may be a cloud server. The charger may carry out data interaction with the cloud through the terminal.

In some embodiments, "first data", "dotting data" and "point-buried data" may be interchanged in some scenarios, which all refer to data associated with the charging state acquired by monitoring the charger.

In an embodiment, the charging state information includes at least one of the number of times of protection, a charging current, a charging voltage, a device temperature, a charging efficiency, an adopted charging protocol, a charging power, a working state of a key device, a charging voltage requested by the terminal and a charging current requested by the terminal.

Here, the number of times of protection may be the number of times of OTP, OCP, OVP and/or UVP.

In an embodiment, first data sent by a charger is received periodically, and the first data includes charging state information of the charger during charging. The first data is sent to a cloud. Firmware of the cloud and firmware of the charger are compared. Second data is received from the cloud in response to that the firmware of the cloud is different from the firmware of the charger, and the second data includes program data determined based on the first data and configured for updating the firmware of the charger. The second data is sent to the charger.

In an embodiment, before comparing the firmware of the cloud with the firmware of the charger, first firmware information of the firmware of the cloud is acquired from the cloud, and second firmware information of the firmware of the charger is acquired from the charger. The first firmware information is used to indicate characteristics of the firmware of the cloud, and the second firmware information is used to indicate characteristics of the firmware of the charger. The first firmware information and the second firmware information are compared. If the first firmware information and the second firmware information are the same, it is determined that the firmware of the cloud is the same with the firmware of the charger. If the first firmware information and the second firmware information are different, it is determined that the firmware of the cloud is different from the firmware of the charger.

In an embodiment, request information for acquiring first data is sent to a charger, and the first data includes charging state information of the charger during charging. The first data sent by the charger is received. The first data is sent to a cloud. Firmware of the cloud and firmware of the charger are compared. Second data is received from the cloud in response to that the firmware of the cloud is different from the firmware of the charger. The second data includes program data determined based on the first data and configured for updating the firmware of the charger. The second data is sent to the charger.

In an embodiment, in response to being in a charging completion state, first data sent by a charger is received, and the first data includes charging state information of the charger during charging. The first data is sent to a cloud. Firmware of the cloud and firmware of the charger are compared. Second data is received from the cloud in response to that the firmware of the cloud is different from the firmware of the charger. The second data includes program data determined based on the first data and configured for updating the firmware of the charger. The second data is sent to the charger.

In an embodiment, in response to being in a charging failure state, first data sent by a charger is received, and the first data includes charging state information of the charger during charging. The first data is sent to a cloud. Firmware of the cloud and firmware of the charger are compared. Second data is received from the cloud in response to that the firmware of the cloud is different from the firmware of the charger. The second data includes program data determined based on the first data and configured for updating the firmware of the charger. The second data is sent to the charger.

In an embodiment, first data sent by a charger is received, and the first data includes charging state information of the charger during charging. The first data is sent to a cloud. Firmware of the cloud and firmware of the charger are compared in response to being in a charging failure state. Second data is received from the cloud in response to that the firmware of the cloud is different from the firmware of the charger. The second data includes program data determined based on the first data and configured for updating the firmware of the charger. The second data is sent to the charger.

In an embodiment, first data sent by a charger is received, and the first data includes charging state information of the charger during charging. Request information sent by a cloud for requesting the first data is received. The first data is sent to the cloud in response to receiving the request information. Firmware of the cloud and firmware of the charger are compared. Second data is received from the cloud in response to that the firmware of the cloud is different from the firmware of the charger. The second data includes program data determined based on the first data and configured for updating the firmware of the charger. The second data is sent to the charger.

In an embodiment, receiving the second data from the cloud may be downloading the second data by initiating a download program.

In an embodiment, first data sent by a charger is received, and the first data includes charging state information of the charger during charging. The first data is sent to a cloud in response to that a state indicated by the charging state information is a first state. The first state is determined based on the number of times of protection events that have occurred in the terminal. Firmware of the cloud and firmware of the charger are compared. Second data is received from the cloud in response to that the firmware of the cloud is different from the firmware of the charger. The second data includes program data determined based on the first data and configured for updating the firmware of the charger. The second data is sent to the charger.

In an embodiment, the protection event may be an OTP event, an OCP event, an OVP event, and/or an UVP event.

In an embodiment, first data sent by a charger is received, and the first data includes charging state information of the charger during charging. The first data is sent to a cloud. Firmware of the cloud and firmware of the charger are compared. Second data is received from the cloud in response to that the firmware of the cloud is different from the firmware of the charger. The second data includes program data determined based on the first data and configured for updating the firmware of the charger. The second data is sent to the charger in response to that the terminal is in a charging completion state. In this way, it can reduce the situation that sending data interferes with the charging process.

In an embodiment, first data sent by a charger is received, and the first data includes charging state information of the charger during charging. The first data is sent to a cloud. Firmware of the cloud and firmware of the charger are compared. Second data is received from the cloud in response to that the firmware of the cloud is different from the firmware of the charger. The second data includes program data determined based on the first data and configured for updating the firmware of the charger. In response to detecting a first operation instruction of a user, the charging process is suspended and the second data is sent to the charger. In this way, the second data can be sent to the charger according to the needs of the user. Here, the first operation instruction may be an instruction input by the user through an input control of a display interface of the terminal.

In an embodiment, first data sent by a charger is received, and the first data includes charging state information of the charger during charging. The first data is sent to a cloud. Firmware of the cloud and firmware of the charger are compared. Second data is received from the cloud in response to that the firmware of the cloud is different from the firmware of the charger. The second data includes program data determined based on the first data and configured for updating the firmware of the charger. In response to receiving request information sent by the charger for acquiring the second data, the charging process is suspended and the second data is sent to the charger.

It should be noted that after sending the second data, the charging process will be restarted.

In an embodiment, first data sent by a charger is received, and the first data includes charging state information of the charger during charging. The first data is sent to a cloud. Second data is received from the cloud in response to that firmware of the cloud is different from a firmware of the charger. The second data includes program data determined based on the first data and configured for updating the firmware of the charger. The second data is sent to the charger. Update information sent by the charger is received. The update information indicates a progress of updating the firmware of the charger by the terminal.

It should be noted that those skilled in the art can understand that the methods provided by the embodiments of the present invention may be executed alone or together with some methods in the embodiments of the present invention or some methods in the related art.

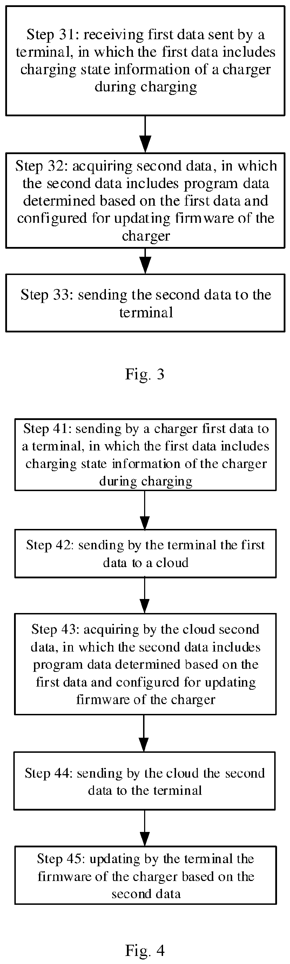

As shown in Fig. 3, embodiments of the present invention provide a firmware updating method, which is executed by a cloud and includes the following steps.

At step 31, first data sent by a terminal is received, and the first data includes charging state information of a charger during charging.

At step 32, second data is acquired, and the second data includes program data determined based on the first data and configured for updating firmware of the charger.

At step 33, the second data is sent to the terminal.

In an embodiment, the charger may be a charger with a data processing function and a data transmission function. The charger can charge the terminal after being connected with a power supply and the terminal, and can send data to the terminal and receive the data sent by the terminal.

In an embodiment, each charger corresponds to a unique identifier for representing the charger.

In an embodiment, the charger is provided with a programmable memory, which stores a program of a firmware and can be written and erased repeatedly (such as for 1000 times). Here, the program of the firmware may be a control program related to controlling the charging and/or communication of the charger.

In an embodiment, the charger is provided with a predetermined storage space (such as 32Mb). The predetermined storage space is used for storing key data acquired during running of a fixed program, such as date, the number of times of over temperature protection (OTP), the number of times of over current protection (OCP), the number of times of over voltage protection (OVP), the number of times of under voltage protection (UVP), a negative temperature coefficient (NTC) temperature of the charger, the number of times of overheating, an output current of the charger, an output voltage of the charger, a charging efficiency, a used protocol and other data. It should be noted that the key data may be saved for a predetermined duration (such as one month), and the saved key data may be automatically deleted if the predetermined duration is exceeded.

In an embodiment, the terminal may be various types of mobile devices or fixed devices. For example, the terminal may be a mobile phone, a computer, an intelligent wearable terminal, a smart home terminal, an industrial sensing device and/or a medical device.

In an embodiment, the cloud may be a cloud server. The charger may carry out data interaction with the cloud through the terminal.

In some embodiments, "first data", "dotting data" and "point-buried data" may be interchanged in some scenarios, which all refer to data associated with the charging state acquired by monitoring the charger.

In an embodiment, the charging state information includes at least one of the number of times of protection, a charging current, a charging voltage, a device temperature, a charging efficiency, an adopted charging protocol, a charging power, a working state of a key device, a charging voltage requested by the terminal and a charging current requested by the terminal.

Here, the number of times of protection may be the number of times of OTP, OCP, OVP and/or UVP.

In an embodiment, different models of chargers have different firmware.

In an embodiment, the cloud may store data of firmware of different chargers.

In an embodiment, the second data includes program data determined by the user based on the first data and configured for updating the firmware of the charger. Alternatively, the second data includes program data determined by the cloud based on the first data and configured for updating the firmware of the charger.

In an embodiment, first data sent by a terminal is received, and the first data includes charging state information of a charger during charging. Second data is determined based on the first data, and the second data includes program data determined based on the first data and configured for updating firmware of the charger. The second data is sent to the terminal.

In an embodiment, request information for acquiring first data is sent to a terminal, and the first data includes charging state information of a charger during charging. The first data sent by the terminal is received in response to receiving the request information. Second data is acquired, and the second data includes program data determined based on the first data and configured for updating firmware of the charger. The second data is sent to the terminal.

In an embodiment, first data sent by a terminal is received, and the first data includes charging state information of a charger during charging. Second data is acquired, and the second data includes program data determined based on the first data and configured for updating firmware of the charger. Request information sent by the terminal for acquiring the second data is received. The second data is sent to the terminal in response to acquiring the request information.

In an embodiment, the cloud may send comparison information to the terminal, and the comparison information indicates a comparison result acquired by the cloud comparing the firmware of the cloud with the firmware of the charger.

It should be noted that those skilled in the art may understand that the methods provided by the embodiments of the present invention may be executed alone or together with some methods in the embodiments of the present invention or some methods in the related art.

As shown in Fig. 4, embodiments of the present invention provide a firmware updating method, which is executed by a firmware updating system. The firmware updating system includes a charger, a cloud and a terminal. The terminal may be, but not limited to, a mobile phone, a computer, a tablet computer and other devices, and the method includes the following steps.

At step 41, the charger sends first data to the terminal, and the first data includes charging state information of the charger during charging.

At step 42, the terminal sends the first data to the cloud.

At step 43, the cloud acquires second data, and the second data includes program data determined based on the first data and configured for updating firmware of the charger.

At step 44, the cloud sends the second data to the terminal.

At step 45, the terminal updates the firmware of the charger based on the second data.

It should be noted that those skilled in the art may understand that the methods provided by the embodiments of the present invention may be executed alone or together with some methods in the embodiments of the present invention or some methods in the related art.

In order to better understand the embodiments of the present invention, the technical solution of the present invention will be further explained by two illustrative examples.

### Example 1

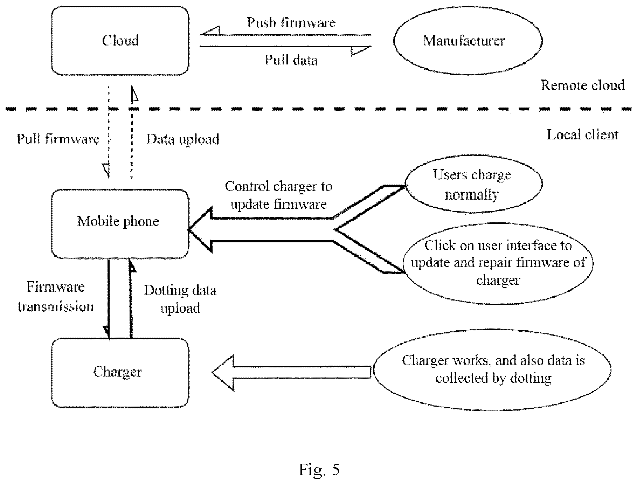

As shown in Fig. 5, a firmware updating system may include a remote cloud and a local client, and the local client may include a mobile phone and a charger.

The firmware transmission and the dotting data (corresponding to the first data) transmission can be realized between the mobile phone and the charger. Between the cloud and the mobile phone, the mobile phone can pull (for example, extract) firmware (corresponding to the second data) from the cloud and upload data to the cloud.

### Example 2

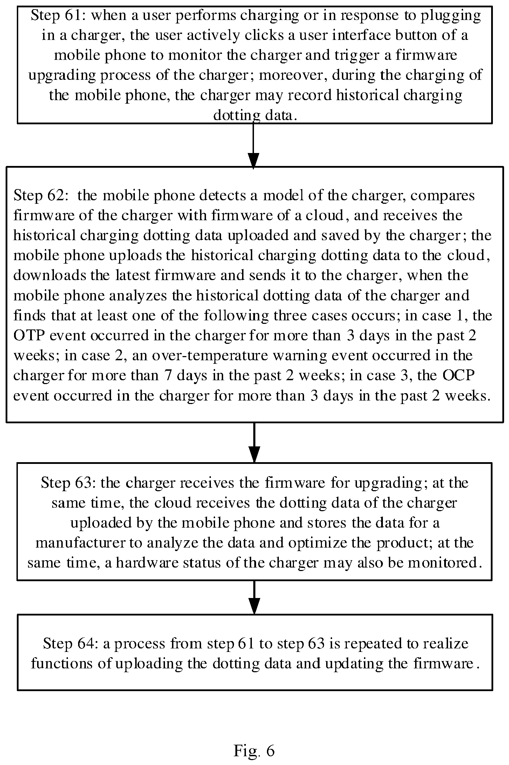

As shown in Fig. 6, embodiments of the present invention provide a firmware updating method, and the method includes the followings steps.

At step 61, when a user performs charging or in response to plugging in a charger, the user actively clicks a user interface button of a mobile phone to monitor the charger and trigger a firmware upgrading process of the charger. Moreover, during the charging of the mobile phone, the charger may record historical charging dotting data (corresponding to the first data in the present invention).

At step 62, the mobile phone detects a model of the charger, compares firmware of the charger with firmware of a cloud, and receives the historical charging dotting data uploaded and saved by the charger. The mobile phone uploads the historical charging dotting data to the cloud, downloads the latest firmware and sends it to the charger, when the mobile phone analyzes the historical dotting data of the charger and finds that at least one of the following three cases occurs.

In case 1, the OTP event occurred in the charger for more than 3 days in the past 2 weeks.

In case 2, an over-temperature warning event occurred in the charger for more than 7 days in the past 2 weeks.

In case 3, the OCP event occurred in the charger for more than 3 days in the past 2 weeks.

At step 63, the charger receives the firmware for upgrading. At the same time, the cloud receives the dotting data of the charger uploaded by the mobile phone and stores the data for a manufacturer to analyze the data and optimize the product. At the same time, a hardware status of the charger may also be monitored.

At step 64, a process from step 61 to step 63 is repeated to realize functions of uploading the dotting data and updating the firmware.

It should be noted that the time of upgrading the firmware is not limited to a time when being fully charged and a time when the user clicks. According to different control logics, the upgrading may be triggered during charging, before charging or at another time. The dotting data may also be stored in the mobile phone at the same time, displayed in the mobile phone, and processed by the mobile phone to show all or part of states of the charger to the user.

It should be noted that those skilled in the art may understand that the methods provided by the embodiments of the present invention may be executed alone or together with some methods in the embodiments of the present invention or some methods in the related art.

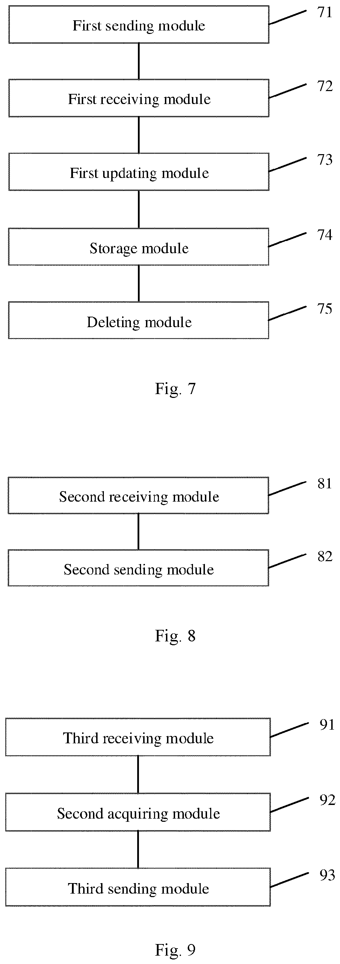

Fig. 7 shows a firmware updating according to an illustrative embodiment of the present invention, and the apparatus includes: a first sending module 71 configured to send first data to a terminal, wherein the first data includes charging state information of a charger during charging; a first receiving module 72 configured to receive second data sent by the terminal, wherein the second data including program data determined based on the first data and configured for updating firmware of the charger; and a first updating module 73 configured to update the firmware of the charger based on the second data.

In an embodiment, the charging state information includes at least one of the number of times of protection, a charging current, a charging voltage, a device temperature, a charging efficiency, an adopted charging protocol, a charging power, a working state of a key device, a charging voltage requested by the terminal and a charging current requested by the terminal.

In an embodiment, the apparatus further includes: a storage module 74 configured to store the first data; and a deleting module 75 configured to delete the stored first data after a first time.

In an embodiment, the first sending module 71 is further configured to send the first data to the terminal in response to being in a charging completion state.

In an embodiment, the first sending module 71 is further configured to send update information to the terminal. The update information indicates a progress of updating the firmware of the charger by the terminal.

It should be noted that those skilled in the art may understand that the methods provided by the embodiments of the present invention may be executed alone or together with some methods in the embodiments of the present invention or some methods in the related art.

Fig. 8 shows a firmware updating apparatus according to an illustrative embodiment of the present invention, and the apparatus includes: a second receiving module 81 configured to receive first data sent by a charger, wherein the first data includes charging state information of the charger during charging; and a second sending module 82 configured to send the first data to a cloud.

The second receiving module 81 is further configured to receive second data from the cloud in response to that firmware of the cloud is different from firmware of the charger, and the second data includes program data determined based on the first data and configured for updating the firmware of the charger.

The second sending module 82 is further configured to send the second data to the charger.

In an embodiment, the second sending module 82 is further configured to send the first data to the cloud in response to that a state indicated by the charging state information is a first state.

The first state is determined based on the number of times of protection events that have occurred in the terminal.

In an embodiment, the second sending module 82 is further configured to: send the second data to the charger in response to that the terminal is in a charging completion state; and/or, send the second data to the charger in response to detecting a first operation instruction of a user.

In an embodiment, the second receiving module 81 is further configured to receive update information sent by the charger.

The update information indicates a progress of updating the firmware of the charger by the terminal.

It should be noted that those skilled in the art may understand that the methods provided by the embodiments of the present invention may be executed alone or together with some methods in the embodiments of the present invention or some methods in the related art.

Fig. 9 shows a firmware updating apparatus according to an illustrative embodiment of the present invention, and the apparatus includes: a third receiving module 91 configured to receive first data sent by a terminal, wherein the first data includes charging state information of a charger during charging; a second acquiring module 92 configured to acquire second data, wherein the second data includes program data determined based on the first data and configured for updating firmware of the charger; and a third sending module 93 configured to send the second data to the terminal.

It should be noted that those skilled in the art may understand that the methods provided by the embodiments of the present invention may be executed alone or together with some methods in the embodiments of the present invention or some methods in the related art.

The embodiments of the present invention provide a firmware updating system, which includes a charger, a terminal and a cloud. The charger is used for executing any method executable by the charger of the present invention, the terminal is used for executing any method executable by the terminal, and the cloud is used for executing any method executable by the cloud.

Embodiments of the present invention also provide a computer-readable storage medium storing an executable program, and the executable program, when executed by a processor, implements the method described in any embodiment of the present invention.

As for apparatuses in the above embodiments, the specific way wherein each module performs the operation has been described in detail in the embodiments of the methods, and will not be described in detail here.

Embodiments of the present invention also provide an electronic device, including: a processor; and a memory for storing instructions executable by the processor. The processor is configured to implement the method according to any embodiment of the present invention when executing the executable instructions.

The memory may include various types of storage media, which are non-temporary computer storage media, and can continue to memorize the information stored thereon after the communication device suffers a power failure.

The processor may be connected with the memory through a bus or the like for reading the executable program stored on the memory.

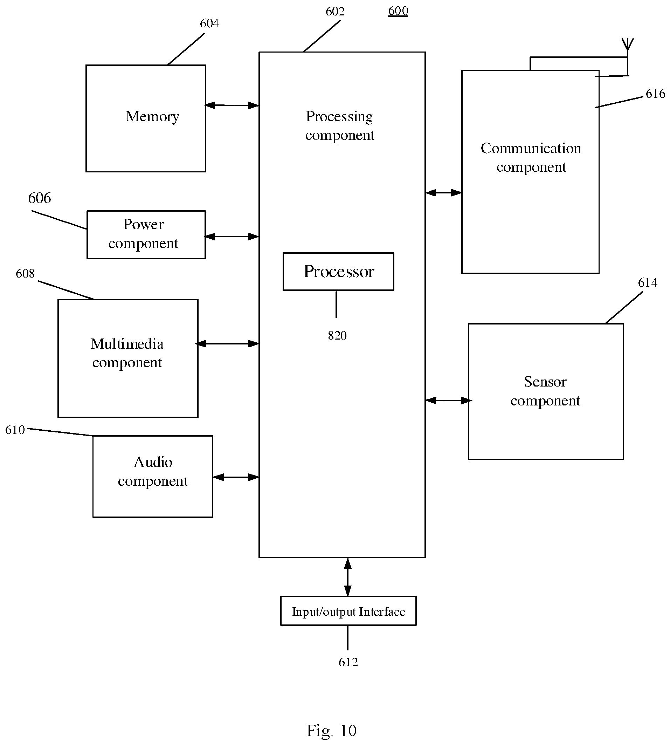

Fig. 10 is a block diagram of an electronic device 600 according to an illustrative embodiment, which can perform the method disclosed in any embodiment of the present invention. For example, the electronic device 600 may be a mobile phone, a computer, a digital broadcasting terminal, a messaging device, a game console, a tablet device, a medical device, a fitness device, a personal digital assistant and the like.

Referring to Fig. 10, the electronic device 600 may include one or more of the following components: a processing component 602, a memory 604, a power component 606, a multimedia component 608, an audio component 610, an input/output (I/ O) interface 612, a sensor component 614, and a communication component 616.

The processing component 602 generally controls the overall operation of the electronic device 600, such as operations associated with display, telephone call, data communication, camera operation and recording operation. The processing component 602 may include one or more processors 820 to execute instructions to complete all or part of the steps of the method described above. In addition, the processing component 602 may include one or more modules to facilitate the interaction between the processing component 602 and other components. For example, the processing component 602 may include a multimedia module to facilitate interaction between the multimedia component 608 and the processing component 602.

The memory 604 is configured to store various types of data to support operations at the device 600. Examples of these data include instructions for any application or method operating on the electronic device 600, contact data, phone book data, messages, pictures, videos, and the like. The memory 604 may be realized by any type of volatile or nonvolatile memory device or their combination, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The power supply component 606 provides power to various components of the electronic device 600. The power component 606 may include a power management system, one or more power supplies, and other components associated with generating, managing and distributing power for the electronic device 600.

The multimedia component 608 includes a screen that provides an output interface between the electronic device 600 and the user. In some embodiments, the screen may include a liquid crystal display (LCD) and a touch panel (TP). If the screen includes a touch panel, the screen may be implemented as a touch screen to receive an input signal from the user. The touch panel includes one or more touch sensors to sense touch, sliding and gestures on the touch panel. The touch sensor may not only sense the boundary of a touch or sliding action, but also detect the duration and pressure related to the touch or sliding operation. In some embodiments, the multimedia component 608 includes a front camera and/or a rear camera. When the device 600 is in an operation mode, such as a shooting mode or a video mode, the front camera and/or the rear camera can receive external multimedia data. Each of the front camera and the rear camera may be a fixed optical lens system or have a focal length and an optical zoom capability.

The audio component 610 is configured to output and/or input audio signals. For example, the audio component 610 includes a microphone (MIC) configured to receive external audio signals when the electronic device 600 is in an operation mode, such as a call mode, a recording mode and a voice recognition mode. The received audio signal may be further stored in the memory 604 or transmitted via the communication component 616. In some embodiments, the audio component 610 further includes a speaker for outputting audio signals.

The I/O interface 612 provides an interface between the processing component 602 and peripheral interface modules, and the peripheral interface modules may be keyboards, clickwheels, buttons, etc. These buttons may include, but are not limited to, a home button, a volume button, a start button and a lock button.

The sensor assembly 614 includes one or more sensors for providing various aspects of status assessments for the electronic device 600. For example, the sensor component 614 may detect the on/off state of the device 600, and the relative positioning of components, such as a display and a keypad of the electronic device 600. The sensor component 614 may also detect the position change of the electronic device 600 or a component of the electronic device 600, the presence or absence of contact between the user and the electronic device 600, the orientation or acceleration/deceleration of the electronic device 600 and the temperature change of the electronic device 600. The sensor assembly 614 may include a proximity sensor, configured to detect the presence of a nearby object without any physical contact. The sensor assembly 614 may also include an optical sensor, such as a CMOS or CCD image sensor, for use in imaging applications. In some embodiments, the sensor assembly 614 may further include an acceleration sensor, a gyro sensor, a magnetic sensor, a pressure sensor or a temperature sensor.

The communication component 616 is configured to facilitate wired or wireless communication between the electronic device 600 and other devices. The electronic device 600 may access a wireless network based on communication standards, such as WiFi, 2G or 3G, 4G/LTE, 5G/NR or a combination thereof. In an illustrative embodiment, the communication component 616 receives a broadcast signal or broadcast related information from an external broadcast management system via a broadcast channel. In an illustrative embodiment, the communication component 616 further includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In an illustrative embodiment, the electronic device 600 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components for performing the above-mentioned methods.

In an illustrative embodiment, there is also provided a non-transitory computer-readable storage medium including instructions, such as the memory 604 including instructions, and the instructions may be executed by the processor 820 of the electronic device 600 to complete the above methods. For example, the non-transitory computer-readable storage medium may be ROM, random access memory (RAM), CD-ROM, magnetic tape, floppy disk, optical data storage device, etc.

## Claims

1. A firmware updating method, executed by a charger, and comprising:
sending (11) first data to a terminal, wherein the first data comprises charging state information of the charger during charging;
receiving (12) second data sent by the terminal, wherein the second data comprises program data determined based on the first data and configured for updating a firmware of the charger; and
updating (13) the firmware of the charger based on the second data.

2. The method according to claim 1, wherein the charging state information comprises at least one of a number of of protection events, a charging current, a charging voltage, a device temperature, a charging efficiency, an adopted charging protocol, a charging power, a working state of a key device, a charging voltage requested by the terminal and a charging current requested by the terminal.

3. The method according to claim 1 or 2, further comprising:
storing the first data; and
deleting the stored first data after a first time.

4. The method according to any one of claims 1 to 3, wherein the sending (11) the first data to the terminal comprises:
sending the first data to the terminal in response to being in a charging completion state.

5. The method according to any one of claims 1 to 4, further comprising:
sending update information to the terminal,
wherein the update information indicates a progress of updating the firmware of the charger by the terminal.

6. A firmware updating method executed by a terminal, and comprising:
receiving (21) first data sent by a charger, wherein the first data comprises charging state information of the charger during charging;
sending (22) the first data to a cloud;
receiving (23) second data from the cloud in response to that firmware of the cloud is different from firmware of the charger, wherein the second data comprises program data determined based on the first data and configured for updating the firmware of the charger; and
sending (24) the second data to the charger.

7. The method according to claim 6, wherein the sending (22) the first data to the cloud comprises:
sending the first data to the cloud in response to that a state indicated by the charging state information is a first state,
wherein the first state is determined based on the number of times of protection events that have occurred in the terminal.

8. The method according to claim 6 or 7, wherein the sending (24) the second data to the charger comprises:
sending the second data to the charger in response to that the terminal is in a charging completion state; and/or
sending the second data to the charger in response to detecting a first operation instruction of a user.

9. The method according to any one of claims 6 to 8, further comprising:
receiving update information sent by the charger,
wherein the update information indicates a progress of updating the firmware of the charger by the terminal.

10. A firmware updating method, executed by a cloud, and comprising:
receiving (31) first data sent by a terminal, wherein the first data comprises charging state information of a charger during charging;
acquiring (32) second data, wherein the second data comprises program data determined based on the first data and configured for updating firmware of the charger; and
sending (33) the second data to the terminal.

11. A firmware updating apparatus, comprising:
a processor (820); and
a memory (604) configured to store instructions executable by the processor (820),
wherein the processor (820) is configured to perform a firmware updating method according to any one of claims 1 to 5.

12. A firmware updating apparatus, comprising:
a processor (820); and
a memory (604) configured to store instructions executable by the processor (820),
wherein the processor (820) is configured to perform a firmware updating method according to any one of claims 6 to 9.

13. A firmware updating apparatus, comprising:
a processor (820); and
a memory (604) configured to store instructions executable by the processor (820),
wherein the processor (820) is configured to perform a firmware updating method according to claim 10.

14. A firmware updating system, comprising a charger, a terminal and a cloud, wherein the charger is configured to execute a method according to any one of claims 1 to 5, the terminal is configured to execute a method according to any one of claims 6 to 9, and the cloud is configured to execute a method according to claim 10.

15. An electronic device, comprising:
a processor (820); and
a memory (604) configured to store instructions executable by the processor (820),
wherein the processor (820) is configured to perform a firmware updating method according to any one of claims 1 to 5, 6 to 9 or 10.
